# EUROPÄISCHE PATENTANMELDUNG

(11) **EP 3 081 281 A1**
(43) Veröffentlichungstag der Anmeldung: **19.10.2016**
(21) Anmeldenummer: 15163566.1
(22) Anmeldetag: 14.04.2015
(51) Int. Cl.: B01D 46/02, B01D 46/12

(54) **TASCHENFILTER UND TASCHE**

(71) Anmelder: Carl Freudenberg KG, 69469 Weinheim (DE)
(72) Erfinder: Klug, Alexander, 69469 Weinheim (DE); Hollingsworth, Anthony, 69488 Birkenau (DE); Coenen, Anja, Dr., Carksville 37043 Tennessee (US); Schmitt, Daniel, Dr., 69488 Birkenau-Hornbach (DE); Tapper, Renate, 64625 Bensheim (DE)

(57) **Zusammenfassung**

Ein Taschenfilter (1, 1', 1", 1'"), umfassend einen Rahmen (2, 2', 2", 2"') und zumindest zwei sackartige Taschen (3, 3', 3", 4, 4'), welche vom Rahmen (2, 2', 2", 2'") abragen, wobei die sackartigen Taschen (3, 3', 3", 4, 4') je eine Einströmöffnung aufweisen, die vom Rahmen (2, 2', 2", 2'") zumindest teilweise umgeben ist, und wobei jede der Taschen (3, 3', 3", 4, 4') einander gegenüberliegende Wandbereiche (3a, 3b, 4a, 4b, 3"a, 3"b, 3"'a, 3"'b, 3"'c, 3"'d, 3"'e, 3"'f, 3"'g) aufweist, ist im Hinblick auf die Aufgabe, einen Taschenfilter anzugeben, der an unterschiedliche Betriebsanforderungen anpassbar ist, dadurch gekennzeichnet, dass die Wandbereiche (3a, 3b, 4a, 4b, 3"a, 3"b, 3"'a, 3"'b, 3"'c, 3"'d, 3"'e, 3"'f, 3"'g) einer einzelnen Tasche (3, 3", 4) aus unterschiedlichen Filtermedien gefertigt sind oder dass zwei einzelne Taschen (3', 4') jeweils einheitlich aus je einem Filtermedium gefertigt sind, wobei sich ein erstes Filtermedium, aus dem die erste Tasche (3') gefertigt ist, von einem zweiten Filtermedium unterscheidet, aus dem die zweite Tasche (4') gefertigt ist. Die Erfindung betrifft des Weiteren eine Tasche.

## Beschreibung

### Technisches Gebiet

Die Erfindung betrifft einen Taschenfilter gemäß dem Oberbegriff des Patentanspruchs 1 und eine Tasche gemäß Patentanspruch 6.

### Stand der Technik

Aus der DE 20 2008 006 834 U1 ist bereits ein Taschenfilter bekannt. Dieser Taschenfilter umfasst einen Rahmen und ein Filtermedium, wobei das Filtermedium als sackartige Tasche ausgebildet ist, welche vom Rahmen abragt, wobei die sackartige Tasche eine Einströmöffnung aufweist, die vom Rahmen zumindest teilweise umgeben ist, und wobei die Tasche einander gegenüberliegende Wandbereiche aufweist.

Je nach verwendetem Filtermedium können relativ hohe Druckdifferenzen zwischen Einström- und Ausströmseite auftreten. Es besteht daher ein Bedarf nach einem Taschenfilter, der diesem Problem begegnet. Insbesondere besteht ein Bedarf nach einem Taschenfilter, bei dem die Werte der Druckdifferenz, des Fraktionsabscheidegrads und/ oder des Staubspeichervermögens zwischen Werten bereits bekannter Taschenfilter liegen.

### Darstellung der Erfindung

Der Erfindung liegt daher die Aufgabe zu Grunde, einen Taschenfilter anzugeben, der an unterschiedliche Betriebsanforderungen anpassbar ist.

Erfindungsgemäß wird die voranstehende Aufgabe mit den Merkmalen der Patentansprüche 1 und 6 gelöst.

Erfindungsgemäß ist erkannt worden, dass durch Verwendung verschiedener Filtermedien in einem Taschenfilter die Werte der Druckdifferenz, des Fraktionsabscheidegrads und/ oder des Staubspeichervermögens gezielt beeinflussbar und einstellbar sind. Durch die gemeinsame Verwendung zumindest eines ersten Filtermediums und eines zweiten Filtermediums in einem Taschenfilter weist dieser eine Art Hybridausgestaltung auf. Die Eigenschaften der beiden oder mehreren Filtermedien ergänzen sich derart, dass an oder mit dem Taschenfilter physikalische Werte gemessen werden können, die zwischen den Werten von Taschenfiltern liegen, die jeweils ausschließlich aus einem einzigen Filtermedium gefertigt sind.

Folglich ist die eingangs genannte Aufgabe gelöst.

Im Rahmen könnten in einer Richtung betrachtet unterschiedliche Taschen einander abfolgen. Dabei ist konkret denkbar, dass jede Tasche aus einem anderen Filtermedium gefertigt ist. Hierdurch wird ein Taschenfilter geschaffen, dessen physikalische Eigenschaften ein breites Spektrum abdecken.

Vor diesem Hintergrund könnten im Rahmen in einer Richtung betrachtet nur zwei unterschiedliche Taschen einander abwechselnd abfolgen, wobei einer ersten Tasche eine zweite folgt und der zweiten wiederum eine erste und wobei sich diese alternierende Abfolge fortsetzt. Hierdurch weist der Taschenfilter einen einfachen Aufbau auf und kann seine Hybrideigenschaften über die gesamte Rahmenbreite und Rahmenlänge entfalten.

Die Wandbereiche der Taschen könnten aus gefalteten Filtermedien gefertigt sein, wobei sich eine Tasche nämlich aus zwei Panels zusammensetzt. Hierdurch kann eine Tasche einfach durch Zusammenfügen zweier flacher gefalteter Filterelemente, nämlich der Panels, zusammengesetzt und im Hinblick auf ihre physikalischen Eigenschaften abgestimmt werden. Ein Panel bildet dabei einen Wandbereich aus.

Vor diesem Hintergrund könnten acht unterschiedliche Filtermedien vorgesehen sein. So können acht verschiedene Panels zu vier verschiedenen Taschen zusammengefügt werden.

Ein Taschenfilter der hier beschriebenen Art könnte in Lackieranlagen, der Zuluftfiltration oder in Turbomaschinen verwendet werden.

### Kurzbeschreibung der Zeichnung

In der Zeichnung zeigen
- Fig. 1: ein Diagramm, in welchem der Fraktionsabscheidegrad bei 4250 m³/h anhand dreier Taschenfilter verglichen wird,
- Fig. 2: einen Taschenfilter, bei welchem die sackartigen Taschen aus gefalteten Filtermedien, nämlich aus je zwei Panels, gefertigt sind,
- Fig. 3: einen Taschenfilter, bei welchem zwei unterschiedliche Taschentypen einander alternierend abfolgen,
- Fig. 4: einen Taschenfilter, welcher Taschen aufweist, deren Wandbereiche aus unterschiedlichen Filtermedien bestehen,
- Fig. 5: eine Seitenansicht eines Taschenfilters, der acht Panels aus jeweils unterschiedlichen Filtermedien aufnimmt, wobei acht unterschiedliche Filtermedien zur Anwendung kommen, und
- Fig. 6: eine Draufsicht auf den Taschenfilter gemäß Fig. 5.

### Ausführung der Erfindung

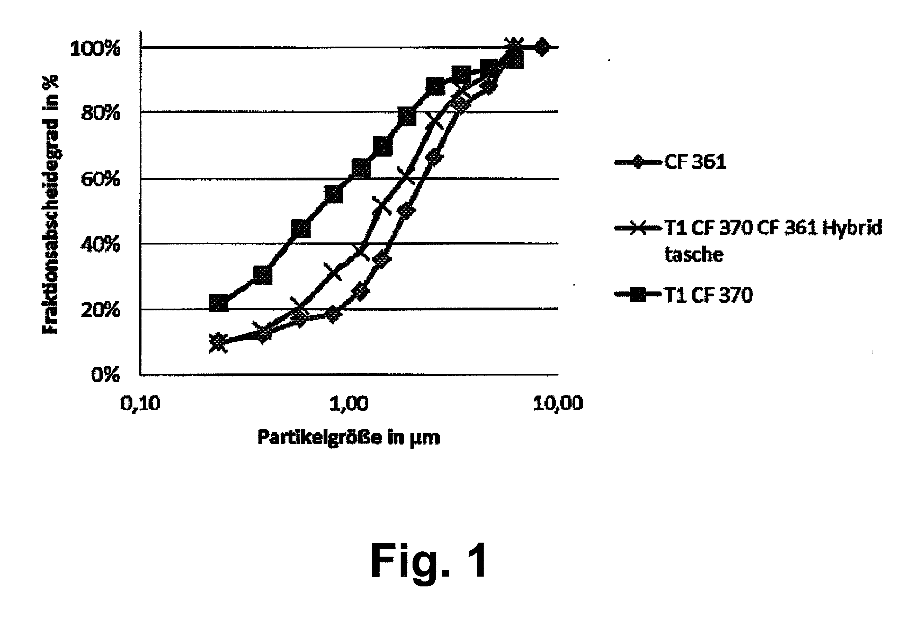

Fig. 1 zeigt ein Diagramm, in welchem der Fraktionsabscheidegrad dreier Taschenfilter bei 4250 m³/ h gegenüber der Partikelgröße aufgetragen ist.

Ein Taschenfilter des Typs T1 ist als Hybrid ausgestaltet, der die unterschiedlichen Filtermedien CF361 und CF370 aufweist.

Die Werte seines Fraktionsabscheidegrads liegen zwischen den Werten zweier Taschenfilter, von denen einer nur das Filtermedium CF 361 und der andere nur das Filtermedium CF370 aufweist.

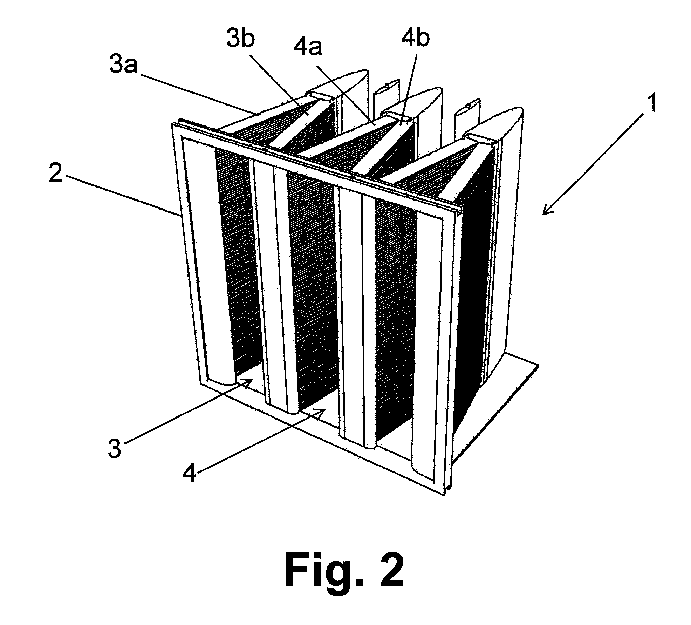

Fig. 2 zeigt konkret einen Taschenfilter 1, umfassend einen Rahmen 2 und zumindest zwei sackartige Taschen 3, 4, welche vom Rahmen 2 abragen, wobei die sackartigen Taschen 3, 4 je eine Einströmöffnung aufweisen, die vom Rahmen 2 zumindest teilweise umgeben ist, und wobei jede der Taschen 3, 4 einander gegenüberliegende Wandbereiche 3a, 3b, 4a, 4b aufweist.

Die Wandbereiche 3a, 3b einer einzelnen Tasche 3 sind aus unterschiedlichen Filtermedien gefertigt.

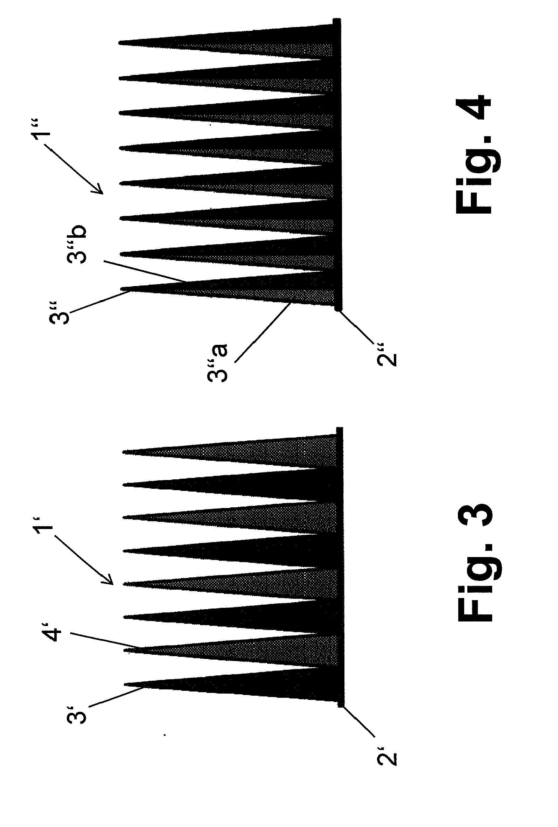

Fig. 4 zeigt dies in schematischer Ansicht anhand eines Taschenfilters 1" mit acht Taschen 3". Jede der Taschen 3" weist einen Wandbereich 3"a auf, der aus einem ersten Filtermedium gefertigt ist, und weist einen Wandbereich 3"b auf, der aus einem zweiten Filtermedium gefertigt ist. Das erste und das zweite Filtermedium unterscheiden sich voneinander. Der Unterschied kann material- oder strukturbedingt sein.

Die Wandbereiche 3a, 3b, 4a, 4b der Taschen 3, 4 des Taschenfilters 1 gemäß Fig. 2 sind aus gefalteten Filtermedien gefertigt, wobei sich eine Tasche 3, 4 nämlich aus zwei Panels zusammensetzt.

Fig. 3 hingegen zeigt, dass zwei einzelne Taschen 3', 4' jeweils einheitlich aus je einem Filtermedium gefertigt sind, wobei sich ein erstes Filtermedium, aus dem die erste Tasche 3' gefertigt ist, von einem zweiten Filtermedium unterscheidet, aus dem die zweite Tasche 4' gefertigt ist.

Im Rahmen 2' folgen in einer Richtung betrachtet unterschiedliche Taschen 3', 4' einander ab. Konkret folgen im Rahmen 2' in einer Richtung betrachtet nur zwei unterschiedliche Taschen 3', 4' einander abwechselnd ab, wobei einer ersten Tasche 3' eine zweite Tasche 4' folgt und der zweiten Tasche 4' wiederum eine erste Tasche 3' und wobei sich diese alternierende Abfolge fortsetzt.

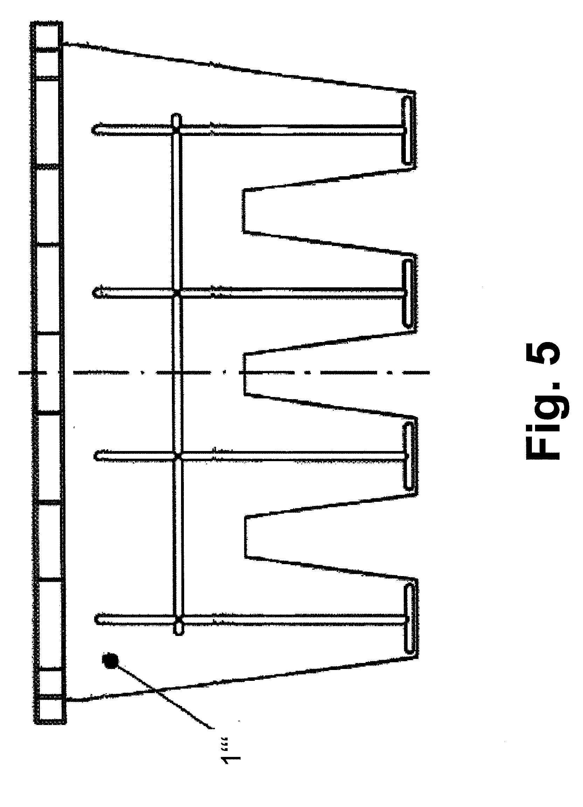

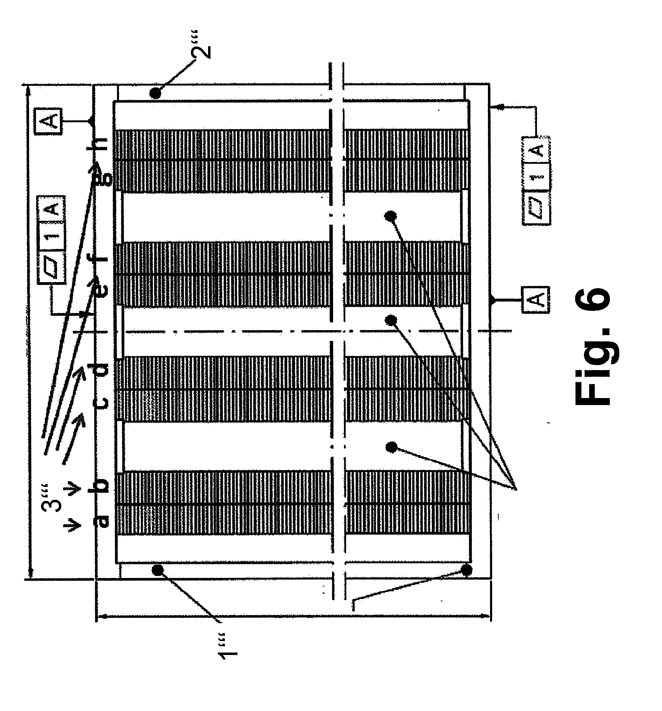

Fig. 5 und 6 zeigen einen Taschenfilter 1"', bei welchem acht unterschiedliche Filtermedien vorgesehen sind. Konkret sind acht Panels vorgesehen, welche die Wandbereiche 3"'a, 3"'b, 3"'c, 3"'d, 3"'e, 3"'f, 3"'g ausbilden.

## Patentansprüche

1. Taschenfilter (1,1', 1", 1'"), umfassend einen Rahmen (2, 2', 2", 2'") und zumindest zwei sackartige Taschen (3, 3', 3", 4, 4'), welche vom Rahmen (2, 2', 2", 2"') abragen, wobei die sackartigen Taschen (3, 3', 3", 4, 4') je eine Einströmöffnung aufweisen, die vom Rahmen (2, 2', 2", 2"') zumindest teilweise umgeben ist, und wobei jede der Taschen (3, 3', 3", 4, 4') einander gegenüberliegende Wandbereiche (3a, 3b, 4a, 4b, 3"a, 3"b, 3"'a, 3"'b, 3"'c, 3"'d, 3"'e, 3"'f, 3"'g) aufweist,
**dadurch gekennzeichnet, dass** die Wandbereiche (3a, 3b, 4a, 4b, 3"a, 3"b, 3"'a, 3"'b, 3"'c, 3"'d, 3"'e, 3"'f, 3"'g) einer einzelnen Tasche (3, 3", 4) aus unterschiedlichen Filtermedien gefertigt sind oder dass zwei einzelne Taschen (3', 4') jeweils einheitlich aus je einem Filtermedium gefertigt sind, wobei sich ein erstes Filtermedium, aus dem die erste Tasche (3') gefertigt ist, von einem zweiten Filtermedium unterscheidet, aus dem die zweite Tasche (4') gefertigt ist.

2. Taschenfilter nach Anspruch 1, **dadurch gekennzeichnet, dass** im Rahmen (2', 2"') in einer Richtung betrachtet unterschiedliche Taschen (3', 4') einander abfolgen.

3. Taschenfilter nach Anspruch 1 oder 2, **dadurch gekennzeichnet, dass** im Rahmen (2') in einer Richtung betrachtet nur zwei unterschiedliche Taschen (3', 4') einander abwechselnd abfolgen, wobei einer ersten Tasche (3') eine zweite folgt und der zweiten wiederum eine erste und wobei sich diese alternierende Abfolge fortsetzt.

4. Taschenfilter nach einem der voranstehenden Ansprüche, **dadurch gekennzeichnet, dass** die Wandbereiche (3a, 3b, 4a, 4b, 3"'a, 3"'b, 3"'c, 3"'d, 3"'e, 3"'f, 3"'g) der Taschen (3, 4) aus gefalteten Filtermedien gefertigt sind, sich eine Tasche (3, 4) nämlich aus zwei Panels zusammensetzt.

5. Taschenfilter nach einem der voranstehenden Ansprüche, **dadurch gekennzeichnet, dass** acht unterschiedliche Filtermedien vorgesehen sind.

6. Tasche zur Verwendung in einem Taschenfilter nach einem der voranstehenden Ansprüche, wobei die Tasche (3") je eine Einströmöffnung aufweist, wobei die Tasche (3") einander gegenüberliegende Wandbereiche (3"a, 3"b) aufweist und wobei die Wandbereiche (3"a, 3"b) der Tasche (3") aus unterschiedlichen Filtermedien gefertigt sind.
